# EUROPÄISCHE PATENTSCHRIFT

(11) **EP 3 747 723 B1**
(45) Veröffentlichungstag und Bekanntmachung des Hinweises auf die Patenterteilung: **26.07.2023**
(21) Anmeldenummer: 19177978.4
(22) Anmeldetag: 03.06.2019
(51) Int. Cl.: B61D 3/20

(54) **GÜTERZUG UND VERFAHREN ZUM TRANSPORT VON GÜTERN UNTER VERWENDUNG EINER GÜTERZUGES**
GOODS TRAIN AND METHOD FOR TRANSPORTING GOODS USING SAME
TRAIN DE MARCHANDISES ET PROCÉDÉ DE TRANSPORT DE MARCHANDISES FAISANT APPEL À UN TRAIN DE MARCHANDISES

(43) Veröffentlichungstag der Anmeldung: 09.12.2020
(73) Patentinhaber: BEWE Logistik Consulting GmbH, 6302 Zug (CH)
(72) Erfinder: WEGMÜLLER, Beat, 4950 Huttwill (CH)
(74) Vertreter: Bird & Bird LLP

(56) Entgegenhaltungen:
- DE-A1-102010 031 173
- E Morita ET AL: "Development of the 'Super Rail Cargo'", , 1. Januar 2006 (2006-01-01), XP055634768, Gefunden im Internet: URL:http://www.railway-research.org/IMG/pd f/438-2.pdf [gefunden am 2019-10-22]
- Gerhard Troche: "High-speed rail freight Sub-report in Efficient train systems for freight transport", , 1. Januar 2005 (2005-01-01), XP055635342, Gefunden im Internet: URL:https://www.kth.se/polopoly_fs/1.87134 !/Menu/general/column-content/attachment/0 512_inlaga.pdf [gefunden am 2019-10-23]

## Beschreibung

Die vorliegende Anmeldung bezieht sich auf einen Güterzug mit einer Vielzahl von Wagen und mit einer Vielzahl von Containerstellplätzen zur Aufnahme von Containern sowie auf ein Verfahren zum Transport von Gütern unter Verwendung eines solchen Güterzuges.

Existierende Güterzüge bestehen aus einer Vielzahl von zur Aufnahme von Containern angepassten Wagen und einer leistungsfähigen Lokomotive mit einer Leistung von zum Beispiel 7 MW zum Antreiben des Zuges. Dabei werden häufig Diesellokomotiven verwendet, entweder während des gesamten Betriebs oder zumindest beim Rangieren als Rangierlokomotive, da nicht auf allen Gleisabschnitten des verfügbaren Schienennetzes Strom verfügbar ist. Ferner wird mit einer großen Anzahl von Wagen und damit langen Zügen von zum Beispiel 700 m Länge gearbeitet, um die Kapazität der Züge zu maximieren. Diese Züge sind relativ schwer und langsam, erfordern große Gleisanlagen zum Trennen und Zusammenfügen von Lokomotiven und Wagen zu Zügen und zum entsprechenden Rangieren und sind daher teuer und unflexibel in Anschaffung und Betrieb.

Aus E. Morita et al.: "Development of the 'Super Rail Cargo‴, 1. Januar 2006 (2006-01-01), XP055634768 ist ein Güterzug bekannt, der an beiden Enden Trieb- und Steuerwagen aufweist, die elektrisch angetrieben werden und die selbst auch Containerstellplätze aufweisen.

Es ist Aufgabe der vorliegenden Erfindung, einen Güterzug bereitzustellen, der effizient, kostengünstig und flexibel betrieben werden kann.

Die Aufgabe wird durch einen Güterzug nach Anspruch 1 und ein Verfahren nach Anspruch 15 gelöst. Vorteilhafte Ausführungsformen des Güterzuges sind Gegenstand der zugehörigen Unteransprüche.

Nach der vorliegenden Erfindung ist ein Güterzug mit einer Vielzahl von Wagen vorgesehen, die miteinander gekoppelt sind und von denen jeder mindestens einen Containerstellplatz zur Aufnahme eines von dem Wagen entfernbaren - d.h. von dem jeweiligen Containerstellplatz bzw. Wagen lösbaren - Containers hat. Die Containerstellplätze können insbesondere zur Aufnahme von ISO-Containern und/oder Wechselbrücken angepasst sein. Jeder der Containerstellplätze wird bevorzugt von einem Rahmen des jeweiligen Wagens bereitgestellt.

An dem Rahmen kann jeweils für jeden Containerstellplatz oder zusammen für alle Containerstellplätze des jeweiligen Wagens ein Adapterrahmen montiert oder montierbar sein, um den Containerstellplatz an einen bestimmten Containertyp und/oder an ein bestimmtes Be- und Entladeverfahren anzupassen, wie zum Beispiel ein Horizontalverfahren, bei dem die Container seitlich in horizontaler Richtung von dem Wagen entnommen bzw. auf den Wagen verbracht werden. Ein solches Verfahren ist beispielsweise in dem Dokument CH 703 859 A2 beschrieben. Der Güterzug weist ferner ein elektrisches Leitungsnetz auf. Dieses kann bevorzugt als ein einziges zusammenhängendes Leitungsnetz ausgebildet sein. Es ist aber auch möglich, dass es mehrere elektrisch voneinander getrennte Segmente aufweist.

Die Vielzahl von Wagen umfasst zwei nicht angetriebene Steuerwagen und bevorzugt insgesamt nur zwei Steuerwagen, einen oder mehrere und maximal zwei elektrisch angetriebene Triebwagen und einen oder mehrere bevorzugt nicht angetriebenen bzw. antreibbaren Zwischenwagen, wie z.B. insgesamt zwei bis vier Zwischenwagen.

Jeder der Steuerwagen ist an einem anderen der beiden gegenüberliegenden Enden des Güterzuges angeordnet und bildet daher einen jeweiligen Abschluss oder Endwagen. Außerdem weist jeder der Steuerwagen eine Steuereinheit und zumindest an einem ersten seiner beiden gegenüberliegenden Enden ein Kupplungselement auf. Jeder der Steuerwagen kann zum Beispiel zwei Containerstellplätze für zwei Wechselbehälter mit einer Länge von beispielsweise jeweils 7,45 m oder für zwei 20' ISO-Container aufweisen. Die Steuerwagen können bevorzugt jeweils einen Führerstand haben. Da der Güterzug zwei Steuerwagen an seinen beiden Enden hat, ist in vorteilhafter Weise ein richtungsunabhängiger Fahrbetrieb und eine Rangierbarkeit in beiden Richtungen durch einen einzigen Zugführer möglich. Außerdem ist es möglich, den Zug in zwei Teil-Kompositionen zu trennen, die jeweils für sich alleine rangiert werden können.

Triebwagen sind im Unterschied zu Lokomotiven angetriebene Schienenfahrzeuge, die auch Platz für Fracht oder Fahrgäste bieten, d.h. im Rahmen der vorliegenden Erfindung für einen oder mehrere Container. Jeder der Triebwagen weist bevorzugt mindestens ein und mehr bevorzugt zwei oder mindestens zwei elektrisch angetriebene Drehgestelle auf, die einen Rahmen tragen, der den mindestens einen Containerstellplatz bereitstellt. Bevorzugt ist jeder Triebwagen ausschließlich durch das Drehgestell oder durch die Drehgestelle antreibbar. Jeder der Triebwagen ist ferner angepasst, um - zusammen mit allen Triebwagen des Zuges oder aber jeder für sich - den Zug in mindestens einer Bewegungsrichtung und bevorzugt in beiden Bewegungsrichtungen anzutreiben. Im ersteren Fall sind jeweils ein oder mehrere verschiedene der Triebwagen für jeweils eine andere der beiden Bewegungsrichtungen vorgesehen. Der Zug ist ausschließlich durch den Triebwagen bzw. die Triebwagen antreibbar, und bevorzugt weist keiner der anderen Wagen des Zuges eine Einrichtung zum Antreiben des Zuges auf. In jedem Fall ist durch das Vorsehen des Triebwagens bzw. der Triebwagen keine Lokomotive erforderlich. Da der Zug somit ohne Diesellokomotive auskommt, sondern einen oder mehrere elektrisch betriebene Triebwagen verwendet, hat er niedrige Emissionswerte in Bezug auf Schall und z.B. CO2.

Jeder der Triebwagen weist jeweils einen oder mehrere Elektromotoren auf, wie zum Beispiel einen oder mehrere Elektromotoren mit einer Versorgungsspannung von 400 V. Es ist außerdem bevorzugt, wenn jeder der Triebwagen eine Invertereinrichtung zur Erzeugung von Wechselstrom aus über das elektrische Leitungsnetz geliefertem elektrischen Gleichstrom zur Energieversorgung des Elektromotors bzw. der Elektromotoren und eine Steuereinrichtung zur Steuerung des Elektromotors bzw. der Elektromotoren aufweist.

Außerdem weist jeder der Triebwagen jeweils und an jedem seiner beiden gegenüberliegenden Enden ein Kupplungselement auf.

Jeder der Zwischenwagen weist an jedem seiner beiden gegenüberliegenden Enden ein Kupplungselement auf. Außerdem kann jeder der Zwischenwagen zum Beispiel vier Containerstellplätze für zum Beispiel vier Wechselbehälter mit einer Länge von 7.45 m aufweisen. Jeder der Zwischenwagen kann bevorzugt als Gelenkwagen mit zum Beispiel drei Drehgestellen ausgestaltet sein.

Jeder der Triebwagen ist über eines seiner Kupplungselemente mit dem Kupplungselement an dem ersten Ende von einem anderen der beiden Steuerwagen unter Ausbildung einer lösbaren Kupplung verbunden. Ferner ist jeder der Zwischenwagen an jedem seiner gegenüberliegenden Enden über sein entsprechendes Kupplungselement jeweils mit einem der Kupplungselemente von einem anderen der Zwischenwagen oder von einem der Triebwagen oder mit dem Kupplungselement an dem ersten Ende von einem der beiden Steuerwagen unter Ausbildung einer lösbaren Kupplung verbunden. Durch diese Ausgestaltung der Kupplungselemente ist in vorteilhafter Weise jeder der Triebwagen separat von dem Güterzug trennbar und kann in einfacher Weise durch einen anderen Triebwagen ersetzt werden, so dass die Triebwagen separat repariert und gewartet werden können, ohne die Verfügbarkeit des Güterzuges stark zu beeinträchtigen. Gleiches gilt auch für die anderen Wagen. Der Güterzug ist daher besonders wartungs- und reparaturfreundlich. Jedes der Kupplungselemente der Wagen kann ein Kupplungselement einer im Betrieb lösbaren Kupplung, wie einer automatischen Kupplung, oder einer nur in einer Werkstatt lösbaren Kupplung, wie einer Mittenstangen-Kurzkupplung, sein.

Der Güterzug weist ferner eine oder mehrerer elektrische Energieversorgungseinrichtungen bzw. elektrische Energiequellen auf, von denen jede jeweils an einem der Wagen angeordnet ist. Im Fall von mehreren solchen elektrischen Energieversorgungseinrichtungen ist bevorzugt jede an einem anderen der Wagen angeordnet. In jedem Fall ist jede dieser elektrischen Energieversorgungseinrichtungen über das elektrische Leitungssystem direkt oder indirekt mit dem Elektromotor bzw. den Elektromotoren von jedem der Triebwagen verbunden und zur Versorgung von jedem dieser Elektromotoren mit elektrischer Energie zum Betrieb des entsprechenden Triebwagens angepasst.

Die Steuereinheit von jedem der beiden Steuerwagen ist angepasst, um separat den Betrieb des Zuges zu steuern, d.h. zumindest dessen Bewegung oder Antrieb durch den mindestens einen Triebwagen und bevorzugt auch weitere Funktionen des Zuges und der einzelnen Wagen.

Der Güterzug, der insbesondere in vorteilhafter Weise als Pendel- bzw. Wendezug ausgebildet sein kann, stellt demnach ein in sich geschlossenes, eigenständiges Zugsystem dar, das mit den Steuerwagen, den Triebwagen und den Zwischenwagen drei Haupt-Systemkomponenten aufweist, die je nach Ausführungs- und Leistungsbedarf flexibel modular zu einem Güterzug einer gewünschten Konfiguration zusammengestellt werden können. So können in einfacher Weise unterschiedliche Zuglängen durch Hinzufügung oder Entfernung von Zwischenwagen und unterschiedliche Leistungsfähigkeiten durch das Vorsehen von zum Beispiel einem oder zwei Triebwagen bereitgestellt werden. Dabei kann der Güterzug aufgrund des Fehlens einer Lokomotive und der Ausnutzung auch von Steuer- und Triebwagen für Containerstellplätze leichter als herkömmliche Güterzüge vergleichbarer Länge ausgebildet sein. Wie nachfolgend erläutert wird, ist außerdem eine flexible und effiziente Verwendung auch bei Ausgestaltungen möglich, die deutlich kürzer als herkömmliche Güterzüge sind, so dass das Gewicht der Güterzüge weiter verringert werden kann. Dadurch und durch die Verwendung elektrisch angetriebener Triebwagen lassen sich kurze Reaktionszeiten bzw. Anfahr- und Bremszeiten und hohe Streckengeschwindigkeit von 120 bis 160 km/h in effizienter Weise realisieren, und das Schienennetz wird weniger stark belastet. Der Güterzug kann in einfacher Weise mit besonders schienenschonenden Antriebseinheiten und Drehgestellen ausgestatten sein, die jeweils mehr Achsen als Lokomotiven und Wagen üblicher Güterzüge aufweisen. Durch die schienenschonende Ausgestaltung kann insgesamt ein günstiger bzw. optimierter Trassenpreis erreicht werden.

Der Güterzug ist in vorteilhafter Weise dazu geeignet und vorgesehen, im Betrieb auf dem öffentlichen Schienennetz zu verkehren und zwar bis in die Anschlussgleisanlagen von Kunden bzw. Unternehmen, d.h. bis in deren eigene Gleisanlagen, die von den Stammgleisen abgehen, wie z.B. Rangiergleise. Wenn die elektrischen Energieversorgungseinrichtungen als autonome Energiequellen ausgestaltet sind oder der Güterzug zum Antreiben der Triebwagen eine zusätzliche autonome Energiequellen aufweist, die optional verwendet werden kann, wie es z.B. in weiter unten erläuterten bevorzugten Ausführungsformen der Fall ist, kann der Güterzug auch Streckenabschnitte ohne Elektrifizierung befahren, wie es normalerweise bei Anschlussgleisanlagen von Unternehmen oder Rangiergleisen der Fall ist. Es können somit effizient die vorhandenen Infrastrukturanlagen verwendet werden, wie etwa existierende normale Gleise bzw. Streckengleise und Verladegleise, wie etwa Freilade-Gleisanlagen.

Der Güterzug kann in vorteilhafter Weise ohne Rangierhilfe in Haltestellen wie etwa Hubs oder Railports einfahren und als solcher be- und entladen werden. Solche Hubs bzw. Railports sind Anlagen oder Güterhöfe mit Abstell- oder Verladegleisen und Rangiergleisen, aus denen in Zusammenhang mit herkömmlichen Güterzügen Wagen entnommen und zu Zügen zusammengesetzt werden. Es ist daher insbesondere in vorteilhafter Weise möglich, zwischen solchen Hubs oder Railports oder anderen Haltestellen den Zug nach einem fixen und relativ kurz getakteten Fahrplan fahren zu lassen. Daraus ergibt sich auch eine hohe Kostentransparenz, vergleichbar mit dem LKW- bzw. Straßentransport.

Durch die Möglichkeit, den Zug schnell ein- und ausfahren zu lassen und ihn als solchen zu be- und entladen, werden auch in vorteilhafter Weise kurze oder minimale Gleisbelegungszeiten an den Haltestellen bzw. den Be- und Entladestellen erreicht. Dadurch ergibt sich eine hohe oder maximale Trassenverfügbarkeit. Letztere wird zudem durch die effiziente Verwendbarkeit kurzer Züge weiter erhöht.

Da es sich um ein geschlossenes Zugsystem handelt, ist ferner eine permanente bzw. kontinuierliche Überwachung der Transportkette in einfacher Weise realisierbar, indem jeder Containerstellplatz und Wagen in der Weise überwacht wird, dass detektiert wird, wo sich die einzelnen Container aktuell befinden und wie mit den einzelnen Containern in Zusammenhang stehende Messwerte sind, wie zum Beispiel Temperaturen der in ihnen transportierten Güter.

Der Zug kann in einfacher und vorteilhafter Weise flexibel zum Beispiel im Rahmen innerstädtischer Logistik, zum Verkehr zwischen dezentralen Logistikzentren und in Städten liegenden Gleis- bzw. Umschlagsanlagen, für Feederverkehr zwischen regionalen Hubs oder Haltepunkten direkt und ohne Zwischenhalte, für Luftfrachtverkehr zwischen Flughäfen, zwischen Seehäfen und im Hinterland liegenden Terminals, zwischen Paket-Verteilzentren und Großkunden oder zwischen Produktionsstandorten und Verarbeitungsbetrieben eingesetzt werden. Es lassen sich Beförderungsfristen vergleichbar mit dem Straßentransport und eine flexible Transportabwicklung erreichen.

In einer bevorzugten Ausführungsform weist der Güterzug nur genau zwei der Triebwagen und bevorzugt keine weiteren Triebwagen auf. Durch das Vorsehen von zwei Triebwagen werden im Vergleich zu einer Ausgestaltung mit nur einem Triebwagen mehr Achsen bereitgestellt, mit denen die Antriebskraft auf die Schienen übertragen wird, so dass die Kraft besser verteilt und so die schienenschonende Ausgestaltung weiter verbessert wird.

In einer bevorzugten Ausführungsform weist mindestens einer - und weisen bevorzugt beide - der Steuerwagen eine der elektrischen Energieversorgungseinrichtungen bzw. elektrischen Energiequellen auf, die in dieser Ausführungsform jeweils als Stromabnehmer ausgebildet ist, der zur Abnahme von Strom von einem Fahrdraht bzw. einer Oberleitung angepasst ist. Der betreffende Steuerwagen weist ferner einen Transformator und einen Inverter auf. Der Transformator ist mit dem Stromabnehmer verbunden und angepasst, um die Spannung der von dem Stromabnehmer bereitgestellten elektrischen Energie von einer höheren Spannung auf eine geringere Spannung zu transformieren, z.B. von 1000 V auf 400 V. Der Inverter ist mit dem Transformator und dem elektrischen Leitungsnetz verbunden und angepasst, um die von dem Transformator transformierte Spannung in eine Gleichspannung umzuwandeln und in das elektrische Leitungsnetz zu übertragen. Auf diese Weise wird die von dem Stromabnehmer abgegriffene relativ hohe Wechselspannung bereits in dem Steuerwagen in eine ungefährlichere niedrigere Gleichspannung umgewandelt, die zur Verringerung von Risiken in dem elektrischen Leitungsnetz von Wagen zu Wagen übertragen wird.

In dieser Ausführungsform ist es ferner bevorzugt, wenn der Transformator bei jedem der Steuerwagen, der einen Stromabnehmer aufweist, unterhalb von dem mindestens einen Containerstellplatz des betreffenden Steuerwagens angeordnet bzw. montiert ist. Er kann bevorzugt liegend, d.h. in waagerechter Anordnung, angeordnet sein. In jedem Fall wird dadurch der für den oder die Containerstellplätze verfügbare Raum maximiert.

In einer bevorzugten Ausführungsform weist das elektrische Leitungsnetz elektrische Verbindungen zwischen benachbarten der Wagen und bevorzugt je eine solche elektrische Verbindung zwischen jeden zwei benachbarten der Wagen auf. Jede der elektrischen Verbindungen umfasst zwei elektrische Anschlüsse, von denen jeder an einem anderen der beiden betreffenden Wagen angeordnet ist und die lösbar elektrisch miteinander verbunden sind. Diese lösbare Verbindung kann zum Beispiel durch eine entsprechende Verbindungsleitung, die an beiden Enden mit jeweils einem der beiden Anschlüsse verbunden ist, oder durch direkte Verbindung der beiden Anschlüsse miteinander realisiert werden. Letzteres kann so vorgesehen sein, dass die beiden Anschlüsse miteinander verbunden werden, wenn die beiden Wagen mit Hilfe ihrer Kupplungselemente miteinander gekoppelt werden, und dass sie getrennt werden, wenn die beiden Wagen voneinander entkoppelt werden. In derselben Weise kann auch eine Datenverbindung zwischen den beiden Wagen hergestellt werden. Alternativ kann eine Datenübertragung innerhalb des Güterzuges in dieser oder anderen Ausführungsformen drahtlos erfolgen.

In einer bevorzugten Ausführungsform weist jeder der Triebwagen eine mit dem Elektromotor bzw. den Elektromotoren des jeweiligen Triebwagens verbundene oder wahlweise verbindbare autonome erste elektrische Energiequelle auf. Diese kann insbesondere eine nicht wieder aufladbare oder bevorzugt wieder aufladbare Batterie sein, wie zum Beispiel eine Lithium-Eisenphosphat-Batterie. In jedem Fall kann dadurch der jeweilige Triebwagen autonom auch dann angetrieben werden, wenn die mindestens eine elektrische Energieversorgungseinrichtung keine elektrische Energie liefert, zum Beispiel wenn sich der Zug in einem Streckenabschnitt ohne Fahrdraht bzw. Elektrifizierung befindet. Dadurch ist ein Ein- und Ausfahren ab dem Streckengeleise in Umschlags- und Anschluss-Gleisanlagen und insgesamt ein Rangieren ohne Elektrifizierung möglich, so dass auch dann der Einsatz von Rangierlokomotiven nicht erforderlich ist. Es kann vorgesehen sein, dass der Rangierbetrieb oder sonstige Betrieb des Zuges bei Verwendung der autonomen elektrischen Energiequelle oder Energiequellen zum Beispiel mit maximal 10 km und/oder über eine maximale Strecke von 5 km möglich ist.

In einer bevorzugten Ausführungsform weist jeder der Triebwagen jeweils zwei elektrisch angetriebene Drehgestelle auf, von denen jedes mindestens einen und bevorzugt zwei der Elektromotoren des Triebwagens aufweist. Dadurch wird eine besonders schienenschonende Ausgestaltung erreicht, da sich die Antriebskraft auf mehr Achsen verteilt.

In einer bevorzugten Ausführungsform weist jeder der Wagen an jedem seiner Containerstellplätze eine mit dem elektrischen Leitungsnetz verbundene Spannungsversorgungseinrichtung zur elektrischen Energieversorgung eines dem betreffenden Containerstellplatz zugeordneten elektrischen Geräts auf. Die Spannungsversorgungseinrichtung kann zum Beispiel in Form eines Stromanschlusses bzw. einer Steckdose oder einer induktiven Stromübertragungseinrichtung ausgestaltet sein. Das jeweilige elektrische Gerät kann Teil des Wagens oder Teil eines auf dem betreffenden Containerstellplatz angeordneten oder anzuordnenden Containers sein. Insbesondere kann das elektrische Gerät jeweils eine Kühl- und/oder Heizeinrichtung zum Kühlen bzw. Heizen des Inhalts eines auf dem jeweiligen Containerstellplatz angeordneten oder anzuordnenden Containers sein. Unabhängig von der Art und Ausgestaltung des elektrischen Geräts ist es ferner bevorzugt, wenn jeder der Wagen eine mit der Spannungsversorgungseinrichtung von jedem seiner Containerstellplätze verbundene oder wahlweise verbindbare autonome zweite elektrische Energiequelle aufweist, die insbesondere eine nicht wieder aufladbare oder bevorzugt eine wieder aufladbare Batterie, wie zum Beispiel eine Lithium-Eisenphosphat-Batterie, sein oder umfassen kann. Dadurch können die elektrischen Geräte an dem jeweiligen Wagen autonom auch dann mit elektrischer Energie versorgt und betrieben werden, wenn die elektrische Energieversorgungseinrichtung oder die elektrischen Energieversorgungseinrichtungen keine elektrische Energie liefert bzw. liefern, zum Beispiel wenn sich der Zug in einem Streckenabschnitt ohne Elektrifizierung befindet. Im Fall der Triebwagen kann, wenn der jeweilige Triebwagen eine autonome erste elektrische Energiequelle aufweist, letztere mit der autonomen zweiten elektrischen Energiequelle identisch oder aber als separate elektrische Energiequelle vorgesehen sein.

In einer bevorzugten Ausführungsform ist das Kupplungselement am ersten Ende der Steuerwagen ein Kupplungselement einer nur in einer Werkstatt lösbaren Kupplung ist, wie etwa einer Mittenstangen-Kurzkupplung. Ferner sind die Kupplungselemente des Triebwagens oder der Triebwagen jeweils ein Kupplungselement einer nur in einer Werkstatt lösbaren Kupplung sind, wie etwa einer Mittenstangen-Kurzkupplung. Außerdem ist bei jedem der Zwischenwagen, der mit einem von der Triebwagen direkt gekoppelt bzw. zu diesem benachbart ist, jedes der Kupplungselemente des betreffenden Zwischenwagens, das eine Kupplung mit einem der Triebwagen ausbildet, ein Kupplungselement einer nur in einer Werkstatt lösbaren Kupplung, wie etwa einer Mittenstangen-Kurzkupplung. Schließlich sind die restlichen Kupplungselemente der Zwischenwagen jeweils ein Element einer im Betrieb lösbaren Kupplung, wie etwa einer automatischen Kupplung.

Durch diese Ausgestaltung der Kupplungselemente ist jede Kupplung zwischen einem der Steuerwagen und einem der Triebwagen und jede Kupplung zwischen einem der Triebwagen und dem benachbarten der Zwischenwagen bevorzugt jeweils eine nur in einer Werkstatt lösbaren Kupplung, wie insbesondere eine Mittenstangen-Kurzkupplung. Dasselbe gilt, bei Ausgestaltungen mit nur einem Triebwagen, bevorzugt auch für die Kupplung zwischen einem der Zwischenwagen und dem nicht mit einem Triebwagen verbundenen Steuerwagen. Solche Kupplungen sind sehr viel günstiger als im Betrieb trennbare Kupplungen, wie automatische Kupplungen. Ferner ist jede Kupplung zwischen benachbarten der Zwischenwagen bevorzugt eine im Betrieb lösbare Kupplung, wie eine automatische Kupplung. Dadurch ist es in einfacher Weise möglich, Zwischenwagen flexibel und schnell zu dem Zug hinzuzufügen, um ihn zu verlängern, oder zu entfernen, um ihn zu verkürzen. Außerdem ist es in einfacher Weise möglich, den Zug zur Ausbildung zweier Teil-Kompositionen, z.B. mittig, zu trennen, und eine oder beide der Teil-Kompositionen separat zum Beispiel im Rangierbetrieb zu verwenden. In letzterem Fall kann eine Funkfernsteuerung vorteilhaft sein, mit der sich die Steuereinheit in jedem der beiden Steuerwagen fernsteuern lässt. Der Zugführer kann dann eine Teil-Komposition von außerhalb steuern, z.B. eine Rückwärtsfahrt in eine Halle. Eine solche Funkfernsteuerung kann aber auch in anderen Situationen und auch zur Fernsteuerung eines vollständigen Zuges vorteilhaft und vorgesehen sein.

In einer bevorzugten Ausführungsform weist einer der Steuerwagen oder jeder der Steuerwagen an seinem dem ersten Ende gegenüberliegenden zweiten Ende ebenfalls ein Kupplungselement auf. In diesem Fall ist es ferner bevorzugt, wenn jedes solche Kupplungselement an dem zweiten Ende von einem der Steuerwagen ein Kupplungselement einer im Betrieb lösbaren Kupplung ist, wie etwa einer automatischen Kupplung. Unabhängig davon kann durch diese Ausgestaltung eine Zugkomposition aus mehreren Güterzügen bereitgestellt werden, die jeweils nach einer der obigen Ausführungsformen ausgestaltet sind und die über die Kupplungselemente an dem zweiten Ende der Steuerwagen miteinander gekoppelt sind. Die Güterzüge sind daher doppel- oder mehrfachkompositionsfähig und somit praktisch "beliebig" verlängerbar. Dabei bleibt dennoch der Vorteil erhalten, dass immer nur ein Zugführer für die Bewegung des Zuges und insbesondere das Rangieren erforderlich ist.

Wie oben bereits erläutert worden ist, kann der Güterzug nach einer der beschriebenen Ausgestaltungsmöglichkeiten zur Durchführung eines Verfahren zum Transport von Gütern verwendet werden, bei dem der Güterzug unverändert bzw. in einer festen Konfiguration zwischen mindestens zwei Haltestellen verkehrt und an jeder der Haltestellen Container auf die Containerstellplätze geladen und/oder von den Containerstellplätzen entladen werden. Dabei ist es möglich, dass in einer oder mehreren der Haltestellen mehrere der Güterzüge zu einer Zugkomposition zusammengefügt werden und in einer oder mehreren der Haltestellen eine solche Zugkomposition wieder in einzelne der Güterzüge getrennt wird. So können Güterzüge gemeinsam z.B. zwischen als Hauptverteilzentren fungierenden Haltestellen verkehren und einzeln zu kleineren regionalen Haltestellen verbracht werden.

Nachfolgend wird die Erfindung unter Bezugnahme auf die beigefügten Figuren anhand eines Ausführungsbeispiels näher erläutert.
- Figur 1: zeigt ein Ausführungsbeispiel eines erfindungsgemäßen Güterzuges.
- Figur 2: zeigt einen Steuerwagen des Güterzuges der Figur 1.
- Figur 3: zeigt einen Triebwagen des Güterzuges der Figur 1.
- Figur 4: zeigt einen Zwischenwagen des Güterzuges der Figur 1.
- Figur 5: zeigt eine Doppelkomposition aus zwei Güterzügen des Ausführungsbeispiels der Figur 1.
- Figur 6: zeigt zwei Teil-Kompositionen nach mittiger Trennung des Güterzugs des Ausführungsbeispiels der Figur 1.

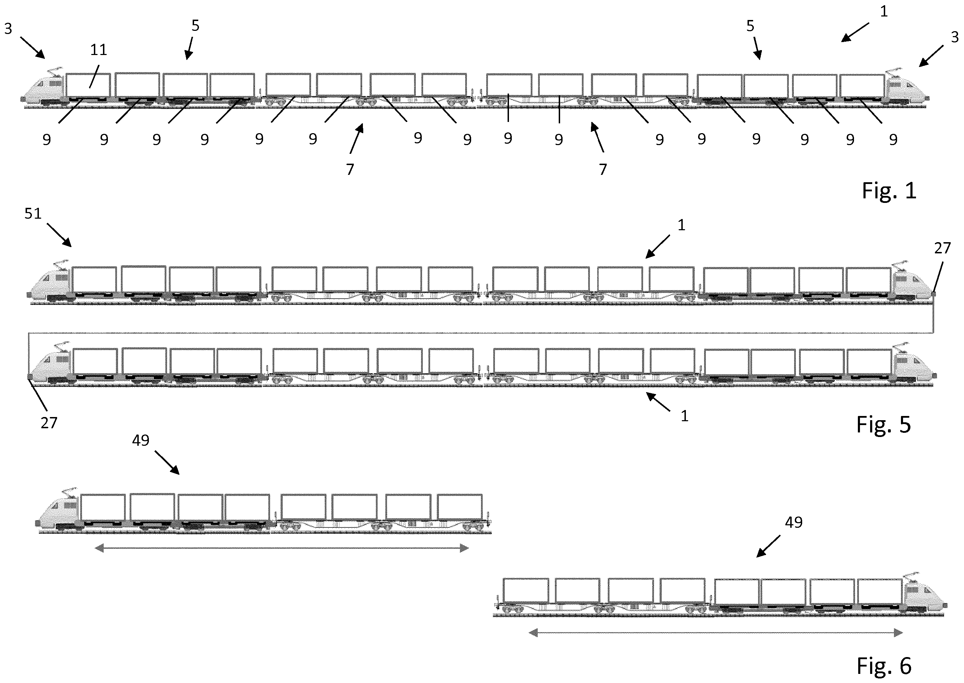

Der in Figur 1 gezeigte Güterzug 1 weist an seinen beiden Enden jeweils einen Steuerwagen 3 auf. An jeden der Steuerwagen 3 ist ein elektrisch angetriebener Triebwagen 5 gekoppelt, und zwischen die beiden Triebwagen 5 sind mehrere Zwischenwagen 7 gekoppelt, in diesem Ausführungsbeispiel zwei Zwischenwagen 7. Jeder der Wagen 3, 5, 7 weist zwei (im Fall der Steuerwagen 3 und Triebwagen 5) bzw. vier (im Fall der Zwischenwagen 7) Containerstellplätze 9 für jeweils einen Container 11 auf, der zum Beispiel ein Wechselbrücke oder ein ISO-Container sein kann. Der Güterzug 1 ist als Wechsel- bzw. Pendelzug ausgestaltet. Da jeder der Wagen 3, 5, 7 und insbesondere auch die Steuerwagen 3 und die Triebwagen 5 Containerstellplätze 9 aufweisen, wird für eine gegebene Zuglänge die Containeraufnahmekapazität des Güterzuges 1 maximiert. Dadurch und durch das Fehlen einer Lokomotive ist der Güterzug 1 leichter als herkömmliche Güterzüge. Dadurch und durch die Verwendung elektrisch angetriebener Triebwagen 5 können hohe Beschleunigungen und Geschwindigkeiten erreicht werden. Die Wagen 3, 5, 7 und der Güterzug 1 insgesamt sind zum Beispiel in vorteilhafter Weise für Betriebsgeschwindigkeiten von 120 bis 160 km/h angepasst. Somit können die Güterzüge 1 mit einer hohen Taktung und auch als relativ kurze Züge effizient und wirtschaftlich betrieben werden. Ferner ist die Zugverfügbarkeit hoch, da aufgrund der separaten Steuerwagen 3 und Triebwagen 5 die Triebwagen 5 zu Wartungs- und Reparaturzwecken aus dem Güterzug 1 entnommen und durch andere Triebwagen 5 ersetzt werden können, um die Verwendbarkeit des Güterzuges 1 während der Wartung und Reparatur aufrecht zu erhalten.

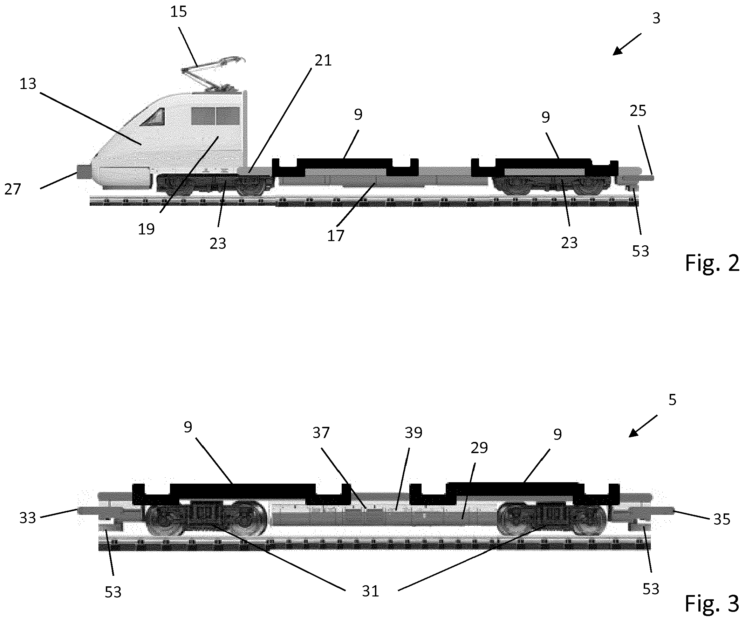

Figur 2 zeigt detaillierter die Ausgestaltung der beiden Steuerwagen 3. Die Steuerwagen 3 weisen jeweils einen Führerstand 13, einen eine elektrische Energieversorgungseinrichtung darstellenden Stromabnehmer 15 zur Abnahme von elektrischer Energie in Form einer Wechselspannung von zum Beispiel 1000 V von einer Oberleitung, einen waagerecht liegend unterhalb der beiden Containerstellplätze 9 montierten Transformator 17 und einen hinter dem Führerstand 13 angeordneten Gleichrichter 19 auf. Die von dem Stromabnehmer 15 abgenommene Wechselspannung wird von dem Transformator 17 auf eine geringere Spannung von zum Beispiel 400 V heruntertransformiert, die dann von dem Gleichrichter 19 in eine Gleichspannung umgewandelt wird. Diese Gleichspannung wird dann in ein elektrisches Leitungssystem des Güterzuges 1 eingespeist. Das Leitungssystem erstreckt sich über alle der Wagen 3, 5, 7 und versorgt somit alle Wagen 3, 5, 7 mit elektrischer Energie. Der Führerstand 13, der Transformator 17 und der Gleichrichter 19 sind an einem Rahmen 21 des Steuerwagens 3 montiert, der von zwei jeweils zweiachsigen nicht angetriebenen Drehgestellen 23 auf den Schienen abgestützt wird. Der Steuerwagen 3 weist an seinem ersten, hinteren Ende ein Kupplungselement 25 einer nur in einer Werkstatt trennbaren Mittenstangen-Kurzkupplung und an seinem zweiten, vorderen Ende ein Kupplungselement 27 einer im Betrieb trennbaren automatischen Kupplung auf. Die Containerstellplätze 9 können jeweils direkt durch den Rahmen 21 oder - wie in Figur 2 beispielhaft gezeigt - durch an diesem montierte Adapterrahmen zur Anpassung an einen bestimmten Containertyp und/oder ein bestimmtes Be- und Entladeverfahren bereitgestellt werden. Der Steuerwagen 3 weist außerdem eine in dem Führerstand 13 untergebrachte Steuereinheit auf, mit der der Betrieb des Güterzuges 1 steuerbar ist.

Figur 3 zeigt detaillierter die Ausgestaltung der beiden Triebwagen 5. Sie weisen jeweils einen Rahmen 29 auf, der von zwei elektrisch angetriebenen Trieb-Drehgestellen 31 mit zum Beispiel jeweils zwei Elektromotoren (nicht gezeigt) zum Antrieb des Triebwagens 5 auf den Schienen abgestützt wird. Die Elektromotoren werden durch das elektrische Leitungsnetz mit elektrischer Energie versorgt. Der Triebwagen 5 weist an seinen beiden gegenüberliegenden Enden jeweils ein Kupplungselement 33, 35 einer nur in einer Werkstatt trennbaren Mittenstangen-Kurzkupplung auf. Jeder der beiden Triebwagen 5 ist über eines seiner beiden Kupplungselement 33, 35 jeweils mit dem Kupplungselement 25 von einem anderen der beiden Steuerwagen 3 unter Ausbildung einer Mittenstangen-Kurzkupplung gekoppelt. Außerdem weist jeder der beiden Triebwagen 5 an seinen beiden gegenüberliegenden Enden jeweils einen elektrischen Anschluss 53 auf. Entsprechende elektrische Anschlüsse 53 sind auch an den Enden der Steuerwagen 3 und der Zwischenwagen 7 vorgesehen (siehe beispielhaft Figur 2 für den Steuerwagen 3). Die elektrischen Anschlüsse 53 werden im gekoppelten Zustand der Wagen elektrisch miteinander verbunden und sind dann - zusammen mit einer etwaigen Verbindungsleitung zwischen den Anschlüssen 53 Teil des elektrischen Leitungsnetzes, das weitere Leitungen oder Leitungsabschnitte zwischen den beiden Anschlüssen 53 jedes jeweiligen Wagens umfasst. Die Anschlüsse 53 könne aber auch so ausgestaltet sein, dass sie automatisch miteinander elektrisch verbunden werden, wenn die betreffenden beiden Wagen miteinander gekoppelt werden, und automatisch voneinander getrennt werden, wenn die betreffenden beiden Wagen voneinander entkoppelt werden.

Die Containerstellplätze 9 können wie im Fall der Steuerwagen 3 jeweils direkt durch den Rahmen 29 oder - wie in Figur 3 beispielhaft gezeigt - durch an diesem montierte Adapterrahmen zur Anpassung an einen bestimmten Containertyp und/oder ein bestimmtes Be- und Entladeverfahren bereitgestellt werden.

Der Triebwagen 5 weist ferner eine Inverter-und Steuerungseinrichtung 37 auf, die mit dem elektrischen Leitungsnetz und den Elektromotoren verbunden ist und die zur Erzeugung einer Wechselspannung zur Versorgung der Elektromotoren und zu deren Steuerung angepasst ist. Die Steuerungseinrichtung 37 ist zur Steuerung der Bewegung des Güterzuges 1 mit der Steuereinheit von jedem der Steuerwagen 3 verbunden, so dass der Güterzug 1 von jedem der Steuerwagen 3 aus gesteuert werden kann.

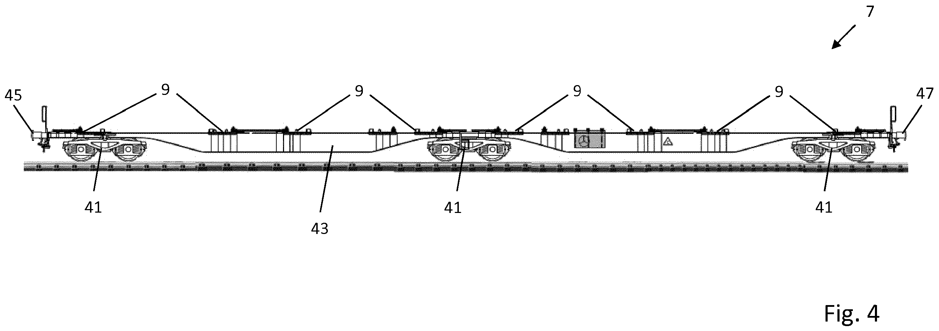

Außerdem weist der Triebwagen 5 eine autonome elektrische Energiequelle 39 in Form einer wieder aufladbaren Batterie auf, die ebenfalls mit der Steuerungseinrichtung 37 und den Elektromotoren verbunden ist und einen autonomen Antrieb des Triebwagens 5 auch ohne Bereitstellung elektrischer Energie durch die Stromabnehmer 15 unter der Steuerung der Steuerwagen 3 ermöglicht. Die autonome elektrische Energiequelle 39 kann auch dazu vorgesehen sein, zum Beispiel Heiz- und/oder Kühlgeräte von auf den Containerstellplätzen 9 angeordneten Containern 11 mit elektrischer Energie zu versorgen, was normalerweise über das elektrische Leitungsnetz durch von den Stromabnehmern 15 gelieferte elektrische Energie erfolgt. Zu letzterem Zweck ist eine solche autonome elektrische Energiequelle 39 zusammen mit einer geeigneten Steuereinrichtung bevorzugt auch an jedem der Steuerwagen 3 und Zwischenwagen 7 vorgesehen, ist aber in den Figuren 2 und 4 nicht separat gezeigt.

Figur 4 zeigt detaillierter die Ausgestaltung der beiden Zwischenwagen 7, die jeweils als ein Gelenkwagen mit drei nicht angetriebenen Drehgestellen 41 ausgestaltet sind, die einen Rahmen 43 des jeweiligen Zwischenwagens 7 auf den Schienen abstützen. Der Zwischenwagen 7 weist an seinen beiden gegenüberliegenden Enden jeweils ein Kupplungselement 45, 47 auf. In dem Ausführungsbeispiel der Figur 4 ist das Kupplungselement 45 ein Kupplungselement einer nur in einer Werkstatt trennbaren Mittenstangen-Kurzkupplung. Über dieses ist jeder der beiden Zwischenwagen 7 jeweils mit einem der Kupplungselemente 33, 35 von einem anderen der beiden Triebwagen 5 unter Ausbildung einer Mittenstangen-Kurzkupplung gekoppelt. Demgegenüber ist das Kupplungselement 47 ein Kupplungselement einer im Betrieb trennbaren automatischen Kupplung, und die Kupplungselemente 47 der beiden Zwischenwagen 7 sind unter Ausbildung einer solchen automatischen Kupplung miteinander gekoppelt. Somit kann der Güterzug 1 sehr einfach und flexibel zur Ausbildung zweier Teil-Kompositionen 49 getrennt werden (siehe Figur 6), von denen jede einen der Steuerwagen 3, einen der Triebwagen 5 und einen der Zwischenwagen 7 aufweist. Eine solche Teil-Komposition 49 kann zum Beispiel separat rangiert werden. Außerdem können die Teil-Kompositionen 49 sehr einfach wieder zu einem vollständigen Güterzug 1 zusammengefügt werden.

Wenn der Güterzug 1 mehr als zwei der Zwischenwagen 7 aufweist, ist bevorzugt auch das Kupplungselement 45 derjenigen Zwischenwagen 7, die nicht zu einem der Triebwagen 5 benachbart sind, als Kupplungselement 45 einer automatischen Kupplung ausgestaltet, so dass zwischen jeden beiden benachbarten Zwischenwagen 7 eine automatische Kupplung vorgesehen ist. Es ist dann - aber auch ansonsten - auf einfache Weise möglich, den Güterzug 1 in verschiedenen Konfigurationen mit einer unterschiedlichen Anzahl von Zwischenwagen 7 und damit Containerstellplätzen 9 bereitzustellen, zum Beispiel zwei, drei und vier Zwischenwagen 7. In ähnlicher Weise ist es auch denkbar, statt zwei Triebwagen 5 nur einen Triebwagen 5 vorzusehen, wenn eine geringere Antriebsleistung erforderlich ist. Dann ist einer der Zwischenwagen 7 mit seinem Kupplungselement 45 unmittelbar mit dem Kupplungselement 25 von einem der Steuerwagen 3 gekoppelt.

Die Containerstellplätze 9 können wie im Fall der Steuerwagen 3 und Triebwagen 5 jeweils direkt durch den Rahmen 43 oder - wie in Figur 4 beispielhaft gezeigt - durch an diesem montierte Adapterrahmen zur Anpassung an einen bestimmten Containertyp und/oder ein bestimmtes Be- und Entladeverfahren bereitgestellt werden.

Der Güterzug 1 kann mit einem anderen, gleichen Güterzug 1 unter Verwendung des Kupplungselements 27 an dem vorderen Ende von einem der beiden Steuerwagen 3 jedes der Züge 1 zu einer Doppel-Komposition 51 zusammengefügt werden, die wie ein verlängerter Zug 1 betrieben werden kann (siehe Figur 5).

## Patentansprüche

1. Güterzug (1) mit einer Vielzahl von Wagen (3, 5, 7), die miteinander gekoppelt sind und von denen jeder mindestens einen Containerstellplatz (9) zur Aufnahme eines von dem Wagen (3, 5, 7) entfernbaren Containers (11) hat, und mit einem elektrischen Leitungsnetz, wobei die Vielzahl von Wagen (3, 5, 7) umfasst:
zwei Steuerwagen (3), von denen jeder an einem anderen der beiden gegenüberliegenden Enden des Zuges (1) angeordnet ist und eine Steuereinheit und zumindest an einem ersten seiner beiden gegenüberliegenden Enden ein Kupplungselement (25) aufweist,
zumindest einen elektrisch angetriebenen Triebwagen (5), der angepasst ist, um den Zug (1) anzutreiben, und der jeweils mindestens einen Elektromotor und an jedem seiner beiden gegenüberliegenden Enden ein Kupplungselement (33, 35) aufweist, und
mindestens einen Zwischenwagen (7), der jeweils an jedem seiner beiden gegenüberliegenden Enden ein Kupplungselement (45, 47) aufweist,
wobei jeder von dem mindestens einen Triebwagen (5) über eines seiner Kupplungselemente (33, 35) mit dem Kupplungselement (25) an dem ersten Ende von einem der beiden Steuerwagen (3) unter Ausbildung einer lösbaren Kupplung verbunden ist und wobei jeder Zwischenwagen (7) an jedem seiner gegenüberliegenden Enden über sein entsprechendes Kupplungselement (45, 47) jeweils mit einem der Kupplungselemente (45, 47) von einem anderen der Zwischenwagen (7) oder von einem von dem mindestens einen Triebwagen (5) oder mit dem Kupplungselement (25) an dem ersten Ende von einem der beiden Steuerwagen (3) unter Ausbildung einer lösbaren Kupplung verbunden ist,
wobei der Zug (1) mindestens eine elektrische Energieversorgungseinrichtung aufweist, die an einem der Wagen (3, 5, 7) angeordnet ist und über das elektrische Leitungssystem mit dem mindestens einen Elektromotor von jedem von dem mindestens einen Triebwagen (5) verbunden ist, und
wobei die Steuereinheit von jedem der beiden Steuerwagen (3) angepasst ist, um den Betrieb des Zuges (1) zu steuern,
**dadurch gekennzeichnet, dass**
der Güterzug (1) maximal zwei elektrisch angetriebene Triebwagen (5) aufweist und ausschließlich durch diese Triebwagen angetrieben ist und
die Steuerwagen nicht angetrieben sind.

2. Güterzug (1) nach Anspruch 1, der genau zwei der Triebwagen (5) aufweist.

3. Güterzug (1) nach Anspruch 1 oder Anspruch 2, bei dem mindestens einer der beiden Steuerwagen (3) eine von der mindestens einen elektrischen Energieversorgungseinrichtung aufweist, die als Stromabnehmer (15) ausgebildet ist, der zur Abnahme von Strom von einem Fahrdraht angepasst ist, wobei der jeweilige Steuerwagen (3) ferner einen Transformator (17) und einen Inverter aufweist und wobei der Transformator (17) mit dem Stromabnehmer (15) verbunden und angepasst ist, um die Spannung der von dem Stromabnehmer (15) bereitgestellten elektrischen Energie von einer höheren Spannung auf eine geringere Spannung zu transformieren, und der Inverter mit dem Transformator (17) und dem elektrischen Leitungsnetz verbunden und angepasst ist, um die von dem Transformator (17) transformierte Spannung in eine Gleichspannung umzuwandeln und in das elektrische Leitungsnetz zu übertragen.

4. Güterzug (1) nach Anspruch 3, bei dem der Transformator (17) bei jedem der Steuerwagen (3), der einen Stromabnehmer (15) aufweist, unterhalb von dem mindestens einen Containerstellplatz (9) des betreffenden Steuerwagens (3) angeordnet ist.

5. Güterzug (1) nach einem der vorhergehenden Ansprüche, bei dem das elektrische Leitungsnetz elektrische Verbindungen (53) zwischen benachbarten der Wagen (3, 5, 7) aufweist, wobei jede der elektrischen Verbindungen zwei elektrische Anschlüsse (53) umfasst, von denen jeder an einem anderen der beiden betreffenden Wagen (3, 5, 7) angeordnet ist und die lösbar elektrisch miteinander verbunden sind.

6. Güterzug (1) nach einem der vorhergehenden Ansprüche, bei dem jeder von dem mindestens einen Triebwagen (5) eine mit dem mindestens einen Elektromotor des jeweiligen Triebwagens (5) verbundene autonome erste elektrische Energiequelle (39) aufweist.

7. Güterzug (1) nach einem der vorhergehenden Ansprüche, bei dem jeder von dem mindestens einen Triebwagen (5) jeweils zwei elektrisch angetriebene Drehgestelle (31) aufweist, von denen jedes mindestens einen von dem mindestens einen Elektromotor des Triebwagens (5) aufweist.

8. Güterzug (1) nach einem der vorhergehenden Ansprüche, bei dem jeder der Wagen (3, 5, 7) an jedem seiner Containerstellplätze (9) eine mit dem elektrischen Leitungsnetz verbundene Spannungsversorgungseinrichtung zur elektrischen Energieversorgung eines dem betreffenden Containerstellplatz (9) zugeordneten elektrischen Geräts aufweist.

9. Güterzug (1) nach Anspruch 8, bei dem das elektrische Gerät jeweils eine Kühl- und/oder Heizeinrichtung zum Kühlen bzw. Heizen des Inhalts eines auf dem jeweiligen Containerstellplatz (9) angeordneten Containers (11) ist.

10. Güterzug (1) nach Anspruch 8 oder Anspruch 9, bei dem jeder der Wagen (3, 5, 7) eine mit der Spannungsversorgungseinrichtung von jedem seiner Containerstellplätze (9) verbundene autonome zweite elektrische Energiequelle aufweist.

11. Güterzug (1) nach einem der vorhergehenden Ansprüche, bei dem
das Kupplungselement (25) am ersten Ende der Steuerwagen (3) ein Kupplungselement einer nur in einer Werkstatt lösbaren Kupplung ist,
die Kupplungselemente (33, 35) des mindestens einen Triebwagens (5) jeweils ein Kupplungselement einer nur in einer Werkstatt lösbaren Kupplung sind,
bei jedem der Zwischenwagen (7), der mit einem von dem mindestens einen Triebwagen (5) direkt gekoppelt ist, jedes der Kupplungselemente (45, 47) des betreffenden Zwischenwagens (7), das eine Kupplung mit einem von dem mindestens einen Triebwagen (5) ausbildet, ein Kupplungselement einer nur in einer Werkstatt lösbaren Kupplung ist und
die restlichen Kupplungselemente (45, 47) der Zwischenwagen (7) jeweils ein Element einer im Betrieb lösbaren Kupplung sind.

12. Güterzug (1) nach einem der vorhergehenden Ansprüche, bei dem zumindest einer der Steuerwagen (3) an seinem dem ersten Ende gegenüberliegenden zweiten Ende ein Kupplungselement (27) aufweist.

13. Güterzug (1) nach Anspruch 12, bei dem jedes Kupplungselement (27) an dem zweiten Ende von einem der Steuerwagen (3) ein Kupplungselement einer im Betrieb lösbaren Kupplung ist.

14. Zugkomposition aus mehreren Güterzügen nach Anspruch 12 oder Anspruch 13, bei der die Güterzüge über die Kupplungselemente (27) an dem zweiten Ende der Steuerwagen (3) miteinander gekoppelt sind.

15. Verfahren zum Transport von Gütern unter Verwendung eines Güterzuges (1) nach einem der Ansprüche 1 bis 13, bei dem der Güterzug (1) unverändert zwischen mindestens zwei Haltestellen verkehrt und an jeder der Haltestellen Container (11) auf die Containerstellplätze (9) geladen und/oder von den Containerstellplätzen (9) entladen werden.

## Claims

1. Freight train (1) comprising a plurality of wagons (3, 5, 7), which are coupled together and each of which having at least one container support space (9) for receiving a container (11) removable from the wagon (3, 5, 7), and an electrical wiring system, the plurality of wagons (3, 5, 7) comprising:
two control cars (3), each of which is arranged at a different one of the two opposite ends of the train (1) and has a control unit and a coupling element (25) at least at a first one of its two opposite ends,
at least one electrically driven motor car (5) adapted to drive the train (1) and having at least one electric motor and a coupling element (33, 35) at each of its two opposite ends, and
at least one intermediate car (7) having a coupling element (45, 47) at each of its two opposite ends,
wherein each of said at least one motor car (5) is connected via one of its coupling elements (33, 35) to the coupling element (25) at the first end of one of the two control cars (3) forming a releasable coupling, and wherein each intermediate car (7) is connected at each of its opposite ends via its corresponding coupling element (45, 47) to one of the coupling elements (45, 47) of another one of the intermediate cars (7) or of one of the at least one motor car (5) or to the coupling element (25) at the first end of one of the two control cars (3) forming a releasable coupling,
wherein said train (1) comprises at least one electrical power supply means arranged on one of said wagons (3, 5, 7) and connected to said at least one electric motor of each of said at least one motor car (5) via said electrical wiring system, and
wherein the control unit of each of the two control cars (3) is adapted to control the operation of the train (1),
**characterized in that**
the freight train (1) has a maximum of two electrically driven motor cars (5) and is driven exclusively by these motor cars, and
the control cars are not driven.

2. Freight train (1) according to claim 1, comprising exactly two of said motor cars (5).

3. Freight train (1) according to claim 1 or claim 2, wherein at least one of the two control cars (3) comprises one of the at least one electrical power supply means, which is configured as a current collector (15) adapted to collect power from a contact wire, wherein the respective control car (3) further comprises a transformer (17) and an inverter, and wherein the transformer (17) is connected to the current collector (15) and adapted to transform the voltage of the electrical energy provided by the current collector (15) from a higher voltage to a lower voltage, and the inverter is connected to the transformer (17) and to the electrical wiring system and adapted to convert the voltage transformed by the transformer (17) into a DC voltage and to transmit it to the electrical wiring system.

4. Freight train (1) according to claim 3, in which, for each of the control cars (3) which has a current collector (15), the transformer (17) is arranged below the at least one container support space (9) of the respective control car (3).

5. Freight train (1) according to any one of the preceding claims, wherein the electrical wiring system comprises electrical connections (53) between adjacent ones of the wagons (3, 5, 7), each of the electrical connections comprising two electrical terminals (53), each of which is located on a different one of the two respective wagons (3, 5, 7) and which are releasably electrically connected to each other.

6. Freight train (1) according to any one of the preceding claims, wherein each of the at least one motor car (5) has an autonomous first electrical power source (39) connected to the at least one electric motor of the respective motor car (5).

7. Freight train (1) according to any one of the preceding claims, wherein each of the at least one motor car (5) comprises two respective electrically driven bogies (31), each of which comprises at least one of the at least one electric motor of the motor car (5).

8. Freight train (1) according to any one of the preceding claims, in which each of the wagons (3, 5, 7) has, at each of its container support spaces (9), a voltage supply means connected to the electrical wiring system for supplying electrical energy to an electrical device associated with the respective container support space (9).

9. Freight train (1) according to claim 8, in which the electrical device is in each case a cooling and/or heating device for cooling or heating the contents of a container (11) arranged on the respective container support space (9).

10. Freight train (1) according to claim 8 or claim 9, wherein each of the wagons (3, 5, 7) has an autonomous second electrical power source connected to the voltage supply means of each of its container support spaces (9).

11. Freight train (1) according to any one of the preceding claims, in which
the coupling element (25) at the first end of the control cars (3) is a coupling element of a coupling that can only be released in a workshop,
the coupling elements (33, 35) of the at least one motor car (5) are each a coupling element of a coupling that can only be released in a workshop,
in each of the intermediate cars (7) directly coupled to one of the at least one motor car (5), each of the coupling elements (45, 47) of the respective intermediate car (7) forming a coupling with one of the at least one motor car (5) is a coupling element of a coupling that can only be released in a workshop, and
the remaining coupling elements (45, 47) of the intermediate cars (7) are each an element of a coupling that can be released during operation.

12. Freight train (1) according to any one of the preceding claims, wherein at least one of the control cars (3) has a coupling element (27) at its second end opposite the first end.

13. Freight train (1) according to claim 12, wherein each coupling element (27) at the second end of one of the control cars (3) is a coupling element of a coupling that can be released during operation.

14. Train composition comprising several freight trains according to claim 12 or claim 13, wherein the freight trains are coupled to one another via the coupling elements (27) at the second end of the control cars (3).

15. Method of transporting goods using a freight train (1) according to any one of claims 1 to 13, wherein the freight train (1) operates unchanged between at least two stops and at each of the stops containers (11) are loaded onto the container support spaces (9) and/or are unloaded from the container support spaces (9).

## Revendications

1. Train de marchandises (1) comprenant une pluralité de voitures (3, 5, 7) qui sont couplées entre elles et desquelles chacune a au moins un emplacement pour conteneur (9) pour recevoir un conteneur (11) pouvant être enlevé de la voiture (3, 5, 7), et avec un réseau de lignes électriques, dans lequel la pluralité de voitures (3, 5, 7) comprend :
deux voitures de commande (3), desquelles chacune est agencée sur une autre des deux extrémités opposées du train (1) et présente une unité de commande et au moins présente un élément d'attelage (25) au moins sur une première de ses deux extrémités opposées,
au moins une voiture motrice (5) à entraînement électrique qui est adaptée pour entraîner le train (1), et qui présente respectivement au moins un moteur électrique et un élément d'attelage (33, 35) sur chacune de ses deux extrémités opposées, et
au moins une voiture intermédiaire (7) qui présente un élément d'attelage (45, 47) respectivement à chacune de ses deux extrémités opposées,
dans lequel chacune de l'au moins une voiture motrice (5) est reliée par un de ses éléments d'attelage (33, 35) à l'élément d'attelage (25) sur la première extrémité d'une des deux voitures de commande (3) en formant un attelage séparable, et dans lequel chaque voiture intermédiaire (7), à chacune de ses extrémités opposées, est reliée, par son élément d'attelage (45, 47) correspondant, respectivement à un des éléments d'attelage (45, 47) d'une autre des voitures intermédiaires (7) ou d'une de l'au moins une voiture motrice (5) ou bien à l'élément d'attelage (25) à la première extrémité d'une des deux voitures de commande (3), en formant un attelage séparable,
dans lequel le train (1) présente au moins un dispositif d'alimentation en énergie électrique qui est disposé sur une des voitures (3, 5, 7) et est relié, par le système de lignes électriques, à l'au moins un moteur électrique de chacune de l'au moins une voiture motrice (5), et
dans lequel l'unité de commande de chacune des deux voitures de commande (3) est adaptée pour commander le fonctionnement du train (1),
**caractérisé en ce que**
le train de marchandises (1) présente au maximum deux voitures motrices (5) à entraînement électrique et est entraîné exclusivement par ces voitures motrices et les voitures de commande ne sont pas entraînées.

2. Train de marchandises (1) selon la revendication 1, qui présente précisément deux des voitures motrices (5).

3. Train de marchandises (1) selon la revendication 1 ou la revendication 2, dans lequel au moins une des deux voitures de commande (3) présente un de l'au moins un dispositif d'alimentation en énergie électrique qui est conçu en tant que pantographe (15), qui est adapté pour recevoir du courant d'un caténaire, dans lequel la voiture de commande (3) respective présente en outre un transformateur (17) et un onduleur, et dans lequel le transformateur (17) est relié au pantographe (15) et adapté pour transformer l'énergie électrique fournie par le pantographe (15) d'une tension supérieure à une tension inférieure, et l'onduleur est relié au transformateur (17) et au réseau de lignes électriques et adapté pour convertir la tension transformée par le transformateur (17) en une tension continue et la transmettre dans le réseau de lignes électriques.

4. Train de marchandises (1) selon la revendication 3, dans lequel le transformateur (17) dans chacune des voitures de commande (3) qui présente un pantographe (15), est disposé sous l'au moins un emplacement pour conteneur (9) de la voiture de commande (3) correspondante.

5. Train de marchandises (1) selon l'une des revendications précédentes, dans lequel le réseau de lignes électriques présente des liaisons électriques (53) entre des voitures (3, 5, 7) voisines, dans lequel chacune des liaisons électriques comprend deux bornes électriques (53), desquelles chacune est disposée sur une autre des deux voitures (3, 5, 7) concernées et sont reliées électriquement entre elles de manière séparable.

6. Train de marchandises (1) selon l'une des revendications précédentes, dans lequel chacune de l'au moins une voiture motrice (5) présente une première source d'énergie électrique (39) reliée à l'au moins un moteur électrique de la voiture motrice (5) respective.

7. Train de marchandises (1) selon l'une des revendications précédentes, dans lequel chacune de l'au moins une voiture motrice (5) présente respectivement deux bogies (31) à entraînement électrique, desquels chacun présente au moins un de l'au moins un moteur électrique de la voiture motrice (5).

8. Train de marchandises (1) selon l'une des revendications précédentes, dans lequel chacune des voitures (3, 5, 7) présente à chacun de ses emplacements pour conteneur (9), un dispositif d'alimentation en tension relié au réseau de lignes électriques pour l'alimentation en énergie électrique d'un appareil électrique assigné à l'emplacement pour conteneur (9) concerné.

9. Train de marchandises (1) selon la revendication 8, dans lequel l'appareil électrique est respectivement un dispositif de refroidissement et/ou de chauffage pour refroidir, respectivement chauffer le contenu d'un conteneur (11) disposé sur l'emplacement pour conteneur (9) concerné.

10. Train de marchandises (1) selon la revendication 8 ou la revendication 9, dans lequel chacune des voitures (3, 5, 7) présente une seconde source d'énergie autonome reliée au dispositif d'alimentation en tension de chacun des emplacements pour conteneur (9).

11. Train de marchandises (1) selon l'une des revendications précédentes, dans lequel
l'élément d'attelage (25) sur la première extrémité des voitures de commande (3) est un élément d'attelage d'un attelage séparable uniquement en atelier,
les éléments d'attelage (33, 35) de l'au moins une voiture motrice (5) sont respectivement un élément d'attelage d'un attelage séparable uniquement en atelier,
dans chacune des voitures intermédiaires (7) qui est couplée directement à une de l'au moins une voiture motrice (5), chacun des éléments d'attelage (45, 47) de la voiture intermédiaire (7) concernée qui forme un attelage avec une de l'au moins une voiture motrice (5) est un élément d'attelage d'un attelage séparable uniquement en atelier et
les éléments d'attelage (45, 47) restants des voitures intermédiaires (7) sont respectivement un élément d'un attelage séparable en atelier.

12. Train de marchandises (1) selon l'une des revendications précédentes, dans lequel au moins une des voitures de commande (3) présente un élément d'attelage (27) sur sa seconde extrémité opposée à la première extrémité.

13. Train de marchandises (1) selon la revendication 12, dans lequel chaque élément d'attelage (27) sur la seconde extrémité d'une des voitures de commande (3) est un élément d'attelage séparable en atelier.

14. Composition ferroviaire de plusieurs trains de marchandises selon la revendication 12 ou la revendication 13, dans laquelle les trains de marchandise sont couplés entre eux sur la seconde extrémité des voitures de commande (3) par le biais des éléments d'attelage (27).

15. Procédé de transport de marchandises utilisant un train de marchandises (1) selon l'une des revendications 1 à 13, dans lequel le train de marchandises (1) circule de manière inchangée entre deux arrêts et à chacun des arrêts, des conteneurs (11) sont chargés et/ou déchargés des emplacements pour conteneur (9).
